# EUROPEAN PATENT APPLICATION

(11) **EP 3 862 622 A1**
(43) Date of publication of application: **11.08.2021**
(21) Application number: 20853591.4
(22) Date of filing: 26.03.2020
(51) Int. Cl.: F21S 8/08, F21V 14/02, F16H 57/12, F21V 21/14, F21V 21/30, F21V 21/15, F16H 55/12, F16H 55/18, F21W 131/406

(54) **STAGE LAMP USING GEARS TO DRIVE LAMP HEAD TO ROTATE**

(30) Priority: 24.12.2019 CN 201911345433
(71) Applicant: Guangzhou Haoyang Electronic Co., Ltd., Guangzhou, Guangdong 511450 (CN)
(72) Inventor: JIANG, Weikai, Guangzhou Guangdong 511450 (CN)
(74) Representative: Canzler & Bergmeier Patentanwälte Partnerschaft mbB
(86) International application number: PCT/CN2020/081498
(87) International publication number: WO 2021/128620

(57) **Abstract**

The present invention discloses a stage light using gears to drive a light head to rotate, which includes a light head and a driving mechanism which drives the light head to rotate. A transmission gear set for meshing transmission is provided between a drive shaft of the driving mechanism and a pivot shaft of the light head. Transmission gear set includes a first gear and a second gear. The first gear includes a first wheel and a second wheel. Gear teeth of the first wheel and gear teeth of the second wheel are misaligned with each other and meshed with the same second gear. Through transmission by the transmission gear set, there is no problem of inaccurate scanning positioning or fracture caused by deformation of a synchronous belt. Moreover, the first gear includes the first wheel and the second wheel, the first wheel or the second wheel is rotated as needed, so that the gear teeth of the first wheel and the gear teeth of the second wheel are staggered with each other, until meshing accuracy of the first gear and the second gear reaches an optimal state, and then is locked, so as to realize a precision transmission of the transmission gear set, so that when the driving mechanism drives the light head to rotate, control of a rotation angle of the light head is more accurate.

## Description

### TECHNICAL FIELD

The present invention relates to the technical field of stage light, and in particular, to a stage light using gears to drive a light head to rotate.

### BACKGROUND

During the work of a stage light, it is often necessary to rotate a light head to adjust an emitting direction of a light beam. Since the light beam projected by the stage light generally has a long distance, even if a rotation angle of the light head has a slight error, it will cause a large deviation in the final projection position. A pivot shaft driving mechanism of a light head of an existing stage light is connected to a pivot shaft for transmission through a synchronous belt, and the rotation of the light head is pulled through the synchronous belt. The synchronous belt is generally made of rubber or plastic. In such transmission process, the synchronous belt needs to play a role of subject to force in addition to the transmission function. Especially when the lamp is side-mounted, force to the synchronous belt is greater, which is likely to cause the synchronous belt to be fractured. And because the synchronous belt is also elastically stretched under the force, it often causes inaccurate scanning positioning of the lamp, which affects the stability of the product.

### SUMMARY

In order to overcome at least one of the above-mentioned defects in the prior art, the present invention provides a stage light using gears to drive a light head to rotate, which directly adopts gear transmission to avoid elastic relaxation, so that a scanning system is more accurate, an effect is more stable, and a space occupation is also smaller.

In order to solve the above-mentioned technical problems, the present invention adopts the following technical solutions. A stage light using gears to drive a light head to rotate, includes a light head and a driving mechanism which drives the light head to rotate. A transmission gear set for meshing transmission is provided between a drive shaft of the driving mechanism and a pivot shaft of the light head. The transmission gear set includes a first gear and a second gear. The first gear includes a first wheel and a second wheel. Gear teeth of the first wheel and gear teeth of the second wheel are misaligned with each other and meshed with the same second gear.

The stage light using the gears to drive the light head to rotate performs transmission by the transmission gear set, and compared with synchronous belt, it will not deform and cause inaccurate scanning positioning or fracture, and the product performance is more stable. Moreover, the first gear includes the first wheel and the second wheel, the first wheel or the second wheel is rotated as needed, so that the gear teeth of the first wheel and the gear teeth of the second wheel are staggered with each other, until meshing accuracy of the first gear and the second gear reaches an optimal state, and then is locked, so as to realize a precision transmission of the transmission gear set, so that when the driving mechanism drives the light head to rotate, control of a rotation angle of the light head is more accurate, and accuracy of the product is improved.

Further, the stage light further includes a supporting arm. The pivot shaft includes a first shaft and a second shaft. The light head is pivotally connected to the supporting arm by the first shaft and rotates around a first direction. The supporting arm is pivotally connected by the second shaft to drive the light head to rotate around a second direction. The transmission gear set is used for transmission between at least one of the first shaft and the second shaft and the drive shaft of the driving mechanism, to improve rotation accuracy and stability of the light head in the corresponding direction. Optionally, the light head has two first shafts, and the transmission gear set is adopted for transmission between only one of the first shafts and the drive shaft of the driving mechanism.

Further, the driving mechanism connected to the first shaft is located in the supporting arm or located in the light head. One can choose freely as needed, and clear space inside the light head or the supporting arm to facilitate installation of other components or heat dissipation.

Further, the driving mechanism connected to the second shaft is located in the supporting arm. Full use of space inside the supporting arm is made.

Further, a center of the first wheel and a center of the second wheel are pivotally connected to each other. the first wheel and the second wheel will not slide and cause displacement when rotating the first wheel or the second wheel, which is convenient for adjusting a misalignment angle between the gear teeth of the first wheel and the gear teeth of the second wheel.

Further, a stationary shaft is fixed to the center of the first wheel. The center of the second wheel is provided with a through hole. The second wheel is sleeved on the stationary shaft. The second wheel rotates around the stationary shaft.

Further, the misalignment angle between the first wheel and the second wheel is adjustable. During the work of the stage light using the gears to drive the light head to rotate, if the first wheel and the second wheel of the first gear are worn or the misalignment angle of them changes, the adjustment and correction can be performed again, the second wheel is rotated to maintain the optimal misalignment angle between the first wheel and the second wheel, ensuring the transmission accuracy of the transmission gear set. In addition, the misalignment angle between the first wheel and the second wheel is adjustable, the second gear can be changed at will, the misalignment angle between the first wheel and the second wheel can be readjusted, so that meshing accuracy of the first gear and the second gear reaches an optimal state.

Further, the first gear further includes an adjusting part which adjusts the misalignment angle between the first wheel and the second wheel, and a locking part which locks the first wheel and the second wheel after adjustment. The misalignment angle between the first wheel and the second wheel can be adjusted by the adjusting part, and the first wheel and the second wheel after adjustment can be locked by the locking part, facilitating adjustment of the transmission accuracy of the transmission gear set during use.

Further, the adjusting part includes an adjusting screw, a threaded hole located at the first wheel and an adjusting hole located at the second wheel. The adjusting screw includes a first screw and a first screw head. The first screw is inserted into the threaded hole and the adjusting hole and is connected to the threaded hole. A width of the adjusting hole is greater than a width of the first screw. One side of the first screw head abuts against a side wall of the adjusting hole, and an active gap is provided between the other side of the first screw head and the side wall of the adjusting hole. During rotation of the adjusting screw, the first screw head drives the second wheel to rotate, and the active gap increases or decreases accordingly. Since the first screw of the adjusting screw is threadedly connected to the second wheel, when the adjusting screw is screwed, a position of the adjusting screw relative to the second wheel will not change. Since the width of the adjusting hole is greater than the width of the first screw, and one side of the first screw head abuts against the side wall of the adjusting hole, and the active gap is provided between the other side of the first screw head and the side wall of the adjusting hole, when the adjusting screw is screwed, the screw head will drive the first wheel to rotate, thereby changing the misalignment angle between the first wheel and the second wheel.

Further, a portion where the adjusting hole abuts against the first screw head and/or a portion where the first screw head abuts against adjusting hole is an inclined plane. Using the inclined plane, the first wheel can be driven to rotate more smoothly during screwing the adjusting screw.

Further, an end of the first screw head and/or an end of the adjusting hole which is far away from the first wheel has a frustum shape. It is easy to process, and during screwing the adjusting screw, the portion where the first screw head abuts against the adjusting hole and/or the portion where the adjusting hole abuts against the first screw head is always the inclined plane, which is convenient to adjust.

Further, a center line of the threaded hole and a center line of the adjusting hole are staggered with each other. Since the threaded hole is threadedly connected to the first screw, and the width of the adjusting hole is greater than the width of the first screw, the width of the adjusting hole must be greater than a width of the threaded hole. The center line of the threaded hole and the center line of the adjusting hole are staggered with each other, which can reduce a size of the adjusting hole, making it easier to process.

Further, the locking part includes a locking hole penetrating the first wheel and the second wheel, and a locking screw inserted into the locking hole. After the misalignment angle between the first wheel and the second wheel is adjusted to an ideal position, by inserting the locking screw into the locking hole for locking, the second wheel is prevented from rotating randomly.

Further, the locking hole includes a locking section located in the first wheel, and a penetrating section located in the second wheel. The locking screw includes a second screw and a second screw head. The second screw is connected to the locking section, a width of the penetrating section is greater than a width of the second screw, and the second screw head abuts against a surface of the second wheel. Since the width of the penetrating section is greater than the width of the second screw, the second wheel can rotate relative to the first wheel. Since the second screw is connected to the locking section, during the rotation of the first wheel, a position of the locking screw relative to the second wheel remains unchanged. When the second screw head abuts against the surface of the second wheel, the first wheel and the second wheel can be locked to prevent the second wheel from rotating randomly.

Further, the number of the locking part is at least two. The first wheel and the second wheel are locked by at least two of the locking parts.

Further, the number of the locking part is three, and the number of the adjusting part is one. The locking parts and the adjusting part are evenly distributed around a center of the first gear, and jointly fix the first wheel and the second wheel, and the force is more balanced.

Further, the drive shaft of the driving mechanism is parallel to the pivot shaft of the light head. According to a space size of an installation position of the driving mechanism, it is determined whether the driving mechanism is located at a side of the transmission gear set close to the pivot shaft, or is located at a side far away from the pivot shaft. As long as the drive shaft and the pivot shaft are arranged in parallel, one can choose freely to arrange the space reasonably.

Further, any adjacent two of the second gear are meshed for transmission by the first gear, or any adjacent two of the first gear are meshed for transmission by the second gear. That is, there will not be two second gears to mesh for transmission, but at least one first gear in each step of the transmission to ensure that each step is precisely transmitted during the transmission, thereby ensuring the overall transmission accuracy.

Further, a diameter of the first gear is smaller than a diameter of the second gear. Due to a complex structure of the first gear, the diameter of the first gear is designed to be small, which facilitates production and assembly, and also facilitates the adjustment of the misalignment angle between the first wheel and the second wheel.

Further, the number of the first gear is one and the number of the second gear is one, the first gear is connected to the drive shaft of the driving mechanism, and the second gear is connected to the pivot shaft of the light head. Connecting the first gear with a smaller diameter to the drive shaft and connecting the second gear with a greater diameter to the pivot shaft of the light head, is conducive to the conversion of gear ratios and reduces speed requirements of a motor.

### BRIEF DESCRIPTION OF THE DRAWINGS

FIG. 1 is an overall structure diagram of a stage light using gears to drive a light head to rotate according to the present invention.
FIG. 2 is an overall structure diagram of a transmission gear set according to the present invention.
FIG. 3 is a schematic diagram of an enlarged structure of part A in FIG. 2.
FIG. 4 is a schematic diagram of an exploded structure of a first gear according to the present invention.
FIG. 5 is a schematic diagram of a front structure of the first gear according to the present invention.
FIG. 6 is a schematic sectional view of the present invention along the A-A direction in FIG. 5.
FIG. 7 is a schematic sectional view of the present invention along the B-B direction in FIG. 5.

In the drawings:
100: light head; 110: pivot shaft; 111: first shaft; 112: second shaft; 200: first gear; 210: first wheel; 211: stationary shaft; 220: second wheel; 221: through hole; 230: adjusting screw; 2301: first screw; 2302: first screw head; 231: threaded hole; 232: adjusting hole; 2321: active gap; 240: locking screw; 2401: second screw; 2402: second screw head; 241: locking hole; 2411: locking section; 2412: penetrating section; 300: second gear; 400: driving mechanism; 410: drive shaft; 500: supporting arm; 510: supporting frame; 600: bottom box.

### DETAILED DESCRIPTION

The accompanying drawings are only for illustrative purposes and cannot be construed as limitations on the present invention. In order to better illustrate the embodiment, some parts of the accompanying drawings may be omitted, enlarged or shrunk, and do not represent the size of an actual product. For those skilled in the art, it is understandable that some well-known structures and their descriptions may be omitted in the accompanying drawings.

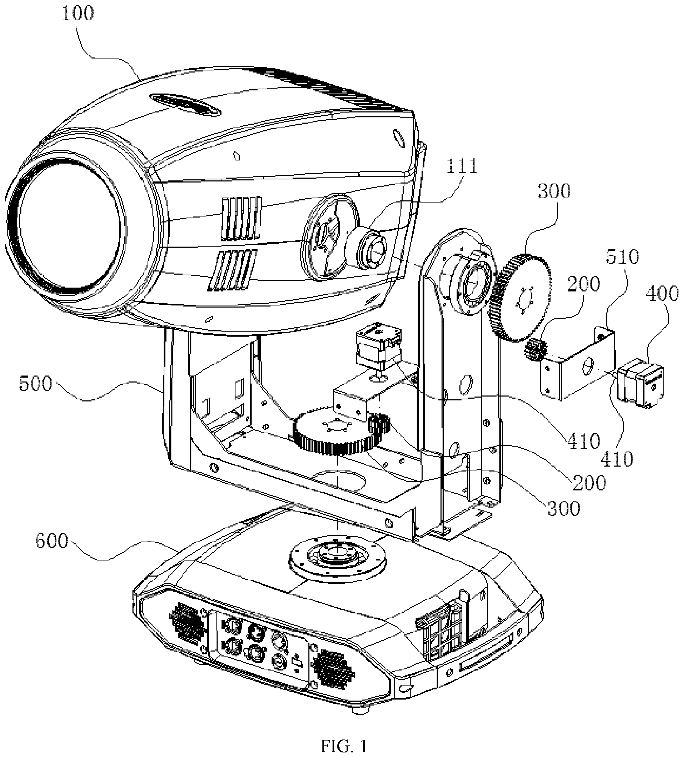

As shown in FIG. 1 to FIG. 4, the present invention provides a stage light using gears to drive a light head to rotate, which includes a light head 100 and a driving mechanism 400 which drives the light head 100 to rotate. A transmission gear set for meshing transmission is provided between a drive shaft 410 of the driving mechanism 400 and a pivot shaft 110 of the light head 100. The transmission gear set includes a first gear 200 and a second gear 300. The first gear 200 includes a first wheel 210 and a second wheel 220. Gear teeth of the first wheel 210 and gear teeth of the second wheel 220 are misaligned with each other and meshed with the same second gear 300.

The stage light using the gears to drive the light head to rotate performs transmission by the transmission gear set, and compared with synchronous belt, it will not deform and cause inaccurate scanning positioning or fracture, and the product performance is more stable. Moreover, the first gear 200 includes the first wheel 210 and the second wheel 220, the first wheel 210 or the second wheel 220 is rotated as needed, so that the gear teeth of the first wheel 210 and the gear teeth of the second wheel 220 are staggered with each other, until meshing accuracy of the first gear 200 and the second gear 300 reaches an optimal state, and then is locked, so as to realize a precision transmission of the transmission gear set, so that when the driving mechanism 400 drives the light head 100 to rotate, control of a rotation angle of the light head 100 is more accurate, and accuracy of the product is improved.

In the present embodiment, a center line of the first wheel 210 and a center line of the second wheel 220 overlap, and end faces fit.

It should be noted that, between the drive shaft 410 of the driving mechanism 400 and the pivot shaft 110 of the light head 100, in addition to using the transmission gear set for transmission, other transmission mechanisms can also be added for transmission together, as long as the transmission accuracy of the other transmission mechanisms is sufficient. Therefore, as long as the transmission gear set is applied to drive the light head 100, it should be deemed to have infringed the patent right of this patent. In order to highlight the inventive point of the present invention, in this embodiment, between the drive shaft 410 of the driving mechanism 400 and the pivot shaft 110 of the light head 100, only the transmission gear set is used for transmission.

In a preferred embodiment of the present invention, it further includes a supporting arm 500. The pivot shaft 110 includes a first shaft 111 and a second shaft 112. The light head 100 is pivotally connected to the supporting arm 500 by the first shaft 111 and rotates around a first direction. The supporting arm 500 is pivotally connected by the second shaft 112 to drive the light head 100 to rotate around a second direction. The transmission gear set is used for transmission between at least one of the first shaft 111 and the second shaft 112 and the drive shaft 410 of the driving mechanism 400, to improve rotation accuracy and stability of the light head 100 in the corresponding direction. Optionally, the light head 100 has two first shafts 111, and the transmission gear set is adopted for transmission between only one of them and the drive shaft 410 of the driving mechanism 400. In the present embodiment, the supporting arm 500 is pivotally connected to a bottom box 600 by the pivot shaft 110.

Optionally, the driving mechanism 400 is a motor, preferably a servo motor. The supporting arm 500 is provided with a supporting frame 510 to support the driving mechanism 400.

In a preferred embodiment of the present invention, the driving mechanism 400 connected to the first shaft 111 is located in the supporting arm 500 or is located in the light head 100. One can choose freely as needed, and clear a space inside the light head 100 or the supporting arm 500 to facilitate installation of other components or heat dissipation.

When the driving mechanism 400 connected to the first shaft 111 is located in the supporting arm 500, the first shaft 111 rotates together with the light head 100, and the present embodiment adopts this solution.

When the driving mechanism 400 connected to the first shaft 111 is located in the light head 100, the first shaft 111 is fixed, while the light head 100 rotates around the first shaft 111. For example, the second gear 300 is fixed to the first shaft 111, the first gear 200 is fixed to the drive shaft 410 of the driving mechanism 400, both the driving mechanism 400 and the first gear 200 are located in the light head 100, and the first gear 200 and the second gear 300 mesh with each other, to drive the light head 100 rotates around the first shaft 111.

In a preferred embodiment of the present invention, the driving mechanism 400 connected to the second shaft 112 is located in the supporting arm 500. Space inside the bottom box 600 is cleared, to facilitate installation of other components or heat dissipation. At this moment, the second shaft 112 is fixed, and the supporting arm 500 rotates around the second shaft 112.

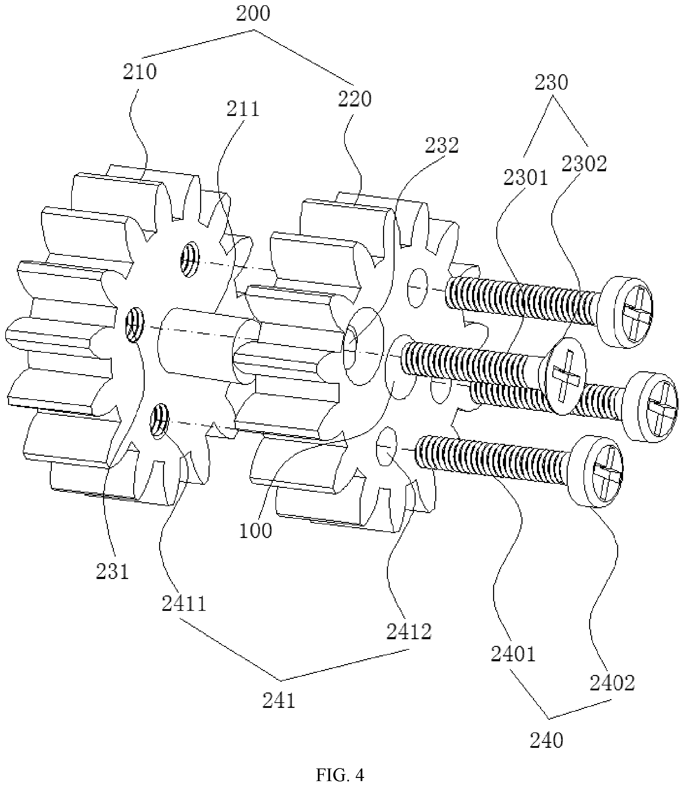

As shown in FIG. 4, in a preferred embodiment of the present invention, a center of the first wheel 210 and a center of the second wheel 220 are pivotally connected to each other. When rotating the first wheel 210 or the second wheel 220, the first wheel 210 and the second wheel 220 will not slide and cause displacement, which is convenient for adjusting a misalignment angle between the gear teeth of the first wheel 210 and the gear teeth of the second wheel 220.

In a preferred embodiment of the present invention, the center of the first wheel 210 is fixed with a stationary shaft 211. The center of the second wheel 220 is provided with a through hole 221. The second wheel 220 is sleeved on the stationary shaft 211. The second wheel 220 rotates around the stationary shaft 211.

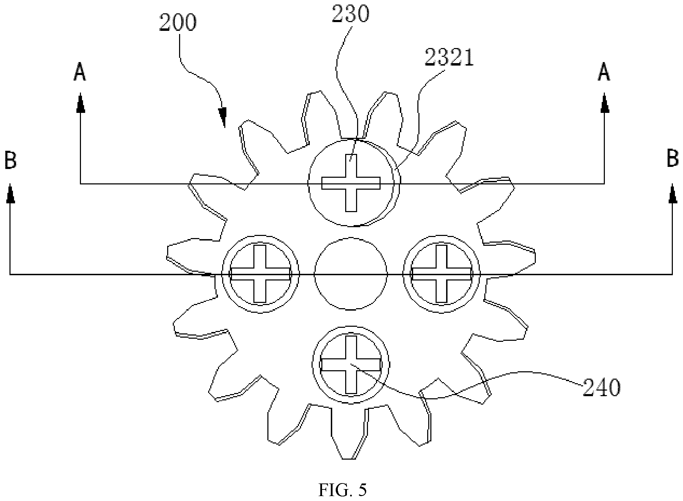

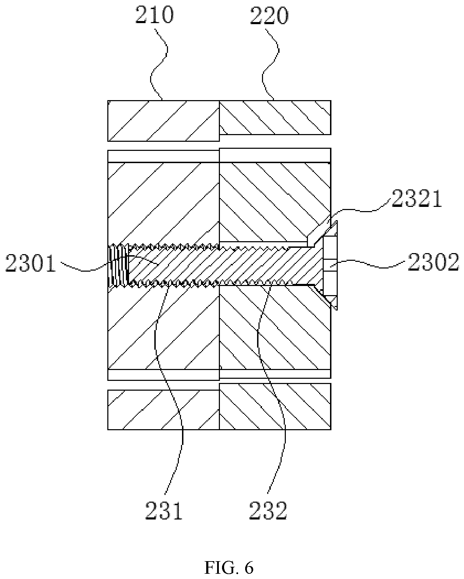

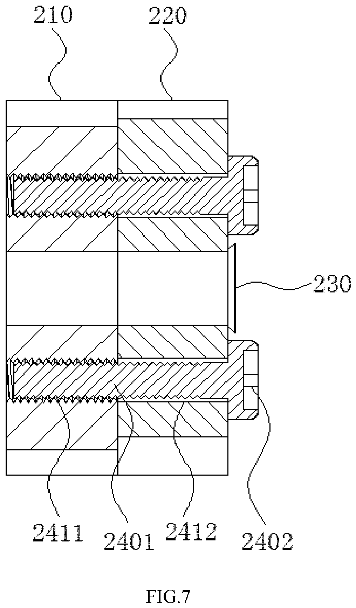

As shown in FIG. 4 to FIG. 7, in a preferred embodiment of the present invention, the misalignment angle between the first wheel 210 and the second wheel 220 is adjustable. During the work of the stage light using the gears to drive the light head to rotate, if the first wheel 210 and the second wheel 220 of the first gear 200 are worn or the misalignment angle changes, the adjustment and correction can be performed again, the second wheel 220 is rotated to maintain the optimal misalignment angle between the first wheel 210 and the second wheel 220, ensuring the transmission accuracy of the transmission gear set. In addition, the misalignment angle between the first wheel 210 and the second wheel 220 is adjustable, the second gear 300 can be changed at will, the misalignment angle between the first wheel 210 and the second wheel 220 can be readjusted, so that meshing accuracy of the first gear 200 and the second gear 300 reaches an optimal state.

In a preferred embodiment of the present invention, the first gear 200 further includes an adjusting part which adjusts the misalignment angle between the first wheel 210 and the second wheel 220, and a locking part which locks the first wheel 210 and the second wheel 220 after adjustment. The misalignment angle between the first wheel 210 and the second wheel 220 can be adjusted by the adjusting part, and the first wheel and the second wheel after adjustment can be locked by the locking part, facilitating adjustment of the transmission accuracy of the transmission gear set during use. Structures of the adjusting part and the locking part can have multiple types, as long as the first wheel 210 and the second wheel 220 can be adjusted and locked smoothly.

In a preferred embodiment of the present invention, the adjusting part includes a adjusting screw 230, a threaded hole 231 located at the first wheel 210 and a adjusting hole 232 located at the second wheel 220. The adjusting screw 230 includes a first screw 2301 and a first screw head 2302. The first screw 2301 is inserted into the threaded hole 231 and the adjusting hole 232 and is connected to the threaded hole 231. A width of the adjusting hole 232 is greater than a width of the first screw 2301. One side of the first screw head 2302 abuts against a side wall of the adjusting hole 232, and an active gap 2321 is provided between the other side of the first screw head 2302 and the side wall of the adjusting hole 232. During rotation of the adjusting screw 230, the first screw head 2302 drives the second wheel 220 to rotate, and the active gap 2321 increases or decreases accordingly. Since the first screw 2301 of the adjusting screw 230 is threadedly connected to the second wheel 220, when the adjusting screw 230 is screwed, a position of the adjusting screw 230 relative to the second wheel 220 will not change. Since the width of the adjusting hole 232 is greater than the width of the first screw 2301, and one side of the first screw head 2302 abuts against the side wall of the adjusting hole 232, and the active gap 2321 is provided between the other side of the first screw head 2302 and the side wall of the adjusting hole 232, when the adjusting screw 230 is screwed, the screw head will drive the first wheel 210 to rotate, thereby changing the misalignment angle between the first wheel 210 and the second wheel 220.

In a preferred embodiment of the present invention, a portion where the adjusting hole 232 abuts against the first screw head 2302 and/or a portion where the first screw head 2302 abuts against adjusting hole 232 is an inclined plane. Using the inclined plane, the first wheel 210 can be driven to rotate more smoothly during screwing the adjusting screw 230.

Preferably, in the present embodiment, both the portion where the adjusting hole 232 abuts against the first screw head 2302 and the portion where the first screw head 2302 abuts against the adjusting hole 232 are the inclined plane.

In a preferred embodiment of the present invention, an end of the first screw head 2302 and/or an end of the adjusting hole 232 which is far away from the first wheel 210 has a frustum shape. It is easy to process, and during screwing the adjusting screw 230, the portion where the first screw head 2302 abuts against the adjusting hole 232 and/or the portion where the adjusting hole 232 abuts against the first screw head 2302 is always the inclined plane, which is easy to adjust.

Preferably, the adjusting screw 230 is a flat head screw.

In a preferred embodiment of the present invention, a center line of the threaded hole 231 and a center line of the adjusting hole 232 are staggered with each other. Since the threaded hole 231 is threadedly connected to the first screw 2301, and the width of the adjusting hole 232 is greater than the width of the first screw 2301, the width of the adjusting hole 232 must be greater than a width of the threaded hole 231. The center line of the threaded hole 231 and the center line of the adjusting hole 232 are staggered with each other, which can reduce a size of the adjusting hole 232, making it easier to process.

In a preferred embodiment of the present invention, the locking part includes a locking hole 241 penetrating the first wheel 210 and the second wheel 220, and a locking screw 240 inserted into the locking hole 241. After the misalignment angle between the first wheel 210 and the second wheel 220 is adjusted to an ideal position, by inserting the locking screw 240 into the locking hole 241 for locking, the second wheel 220 is prevented from rotating randomly.

In a preferred embodiment of the present invention, the locking hole 241 includes a locking section 2411 located in the first wheel 210, and a penetrating section 2412 located in second wheel 220. The locking screw 240 includes a second screw 2401 and a second screw head 2402. The second screw 2401 is connected to the locking section 2411, a width of the penetrating section 2412 is greater than a width of the second screw 2401, and the second screw head 2402 abuts against a surface of the second wheel 220. Since the width of the penetrating section 2412 is greater than the width of the second screw 2401, the second wheel 220 can rotate relative to the first wheel 210. Since the second screw 2401 is connected to the locking section 2411, during rotation of the first wheel 210, a position of the locking screw 240 relative to the second wheel 220 remains unchanged. When the second screw head 2402 abuts against the surface of the second wheel 220, the first wheel 210 and the second wheel 220 can be locked to prevent the second wheel 220 from rotating randomly.

In a preferred embodiment of the present invention, the number of the locking part is at least two. The first wheel 210 and the second wheel 220 are locked by at least two of the locking part.

In a preferred embodiment of the present invention, the number of the locking part is three, and the number of the adjusting part is one. The locking parts and the adjusting part are evenly distributed around a center of the first gear 200, and jointly fix the first wheel 210 and the second wheel 220, and the force is more balanced.

As shown in FIG. 1, in a preferred embodiment of the present invention, the drive shaft 410 of the driving mechanism 400 is parallel to the pivot shaft 110 of the light head 100. According to a space size of an installation position of the driving mechanism 400, it is determined whether the driving mechanism 400 is located at a side of the transmission gear set close to the pivot shaft 110, or is located at a side far away from the pivot shaft 110. As long as the drive shaft 410 and the pivot shaft 110 are arranged in parallel, one can choose freely to arrange the space reasonably.

In a preferred embodiment of the present invention, any adjacent two of the second gear 300 are meshed for transmission by the first gear 200, or any adjacent two of the first gear 200 are meshed for transmission by the second gear 300. That is, there will not be two second gears 300 to mesh for transmission, but at least one first gear 200 in each step of the transmission to ensure that each step is precisely transmitted during the transmission, thereby ensuring the overall transmission accuracy.

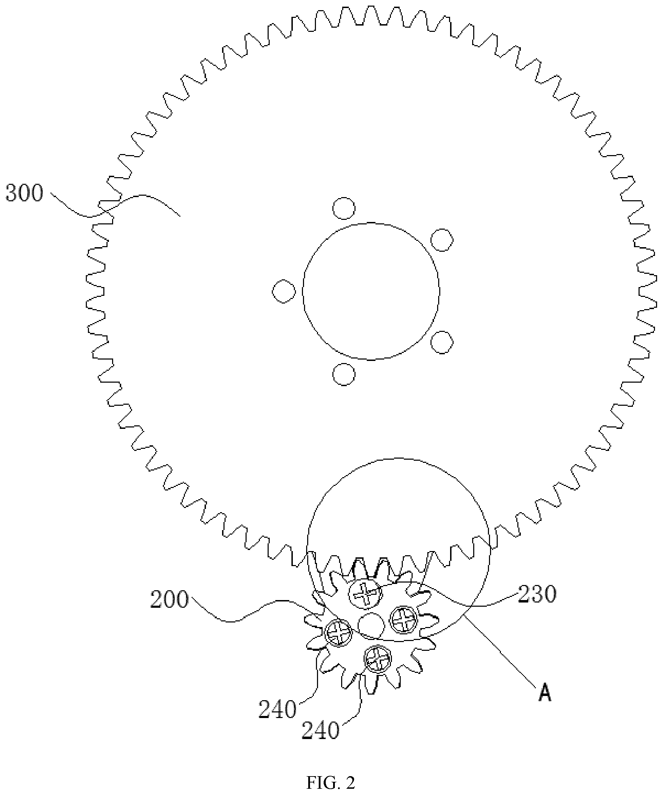

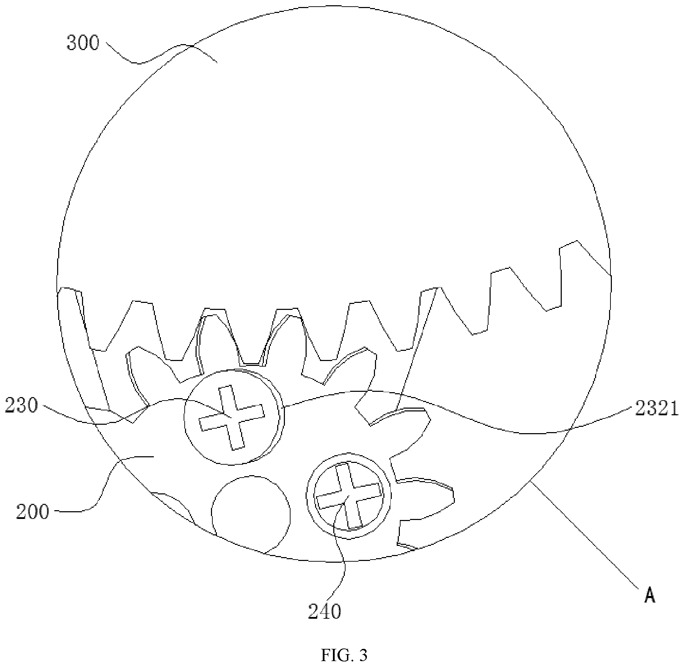

As show in FIG. 2 and FIG. 3, in a preferred embodiment of the present invention, a diameter of the first gear 200 is smaller than a diameter of the second gear 300. Due to a complex structure of the first gear 200, the diameter of the first gear 200 is designed to be small, which facilitates production and assembly, and also facilitates the adjustment of the misalignment angle between the first wheel 210 and the second wheel 220.

In a preferred embodiment of the present invention, the number of the first gear 200 is one and the number of the second gear 300 is one, the first gear 200 is connected to the drive shaft 410 of the driving mechanism 400, and the second gear 300 is connected to the pivot shaft 110 of the light head 100. Connecting the first gear 200 with a smaller diameter to the drive shaft 410 and connecting the second gear 300 with a greater diameter to the pivot shaft 110 of the light head 100, is conducive to the conversion of gear ratios and reduces speed requirements of a motor.

Obviously, the above-mentioned embodiments of the present invention are only examples to clearly illustrate the present invention, and are not intended to limit the implementation of the present invention. For those ordinarily skilled in the art, other changes or variations in different forms can be made on the basis of the above description. It is not necessary and cannot be an exhaustive list of all implementations herein. Any modification, equivalent replacement and improvement made within the spirit and principle of the present invention shall be included in the scope of protection claimed by the present invention.

## Claims

1. A stage light using gears to drive a light head to rotate, **characterized in that**, the stage light comprises a light head (100) and a driving mechanism (400) which drives the light head (100) to rotate, wherein a transmission gear set for meshing transmission is provided between a drive shaft (410) of the driving mechanism (400) and a pivot shaft (110) of the light head (100), the transmission gear set comprises a first gear (200) and a second gear (300), the first gear (200) comprises a first wheel (210) and a second wheel (220), and gear teeth of the first wheel (210) and gear teeth of the second wheel (220) are misaligned with each other and meshed with the same second gear (300).

2. The stage light using the gears to drive the light head to rotate according to claim 1, wherein the stage light further comprises a supporting arm (500), the pivot shaft (110) comprises a first shaft (111) and a second shaft (112), the light head (100) is pivotally connected to the supporting arm (500) by the first shaft (111) and rotates around a first direction, the supporting arm (500) is pivotally connected by the second shaft (112) to drive the light head (100) to rotate around a second direction, and the transmission gear set is used for transmission between at least one of the first shaft (111) and the second shaft (112) and the drive shaft (410) of the driving mechanism (400).

3. The stage light using the gears to drive the light head to rotate according to claim 2, wherein the driving mechanism (400) connected to the first shaft (111) is located in the supporting arm (500) or located in the light head (100).

4. The stage light using the gears to drive the light head to rotate according to claim 2, wherein the driving mechanism (400) connected to the second shaft (112) is located in the supporting arm (500).

5. The stage light using the gears to drive the light head to rotate according to claim 1, wherein a center of the first wheel (210) and a center of the second wheel (220) are pivotally connected to each other.

6. The stage light using the gears to drive the light head to rotate according to claim 5, wherein a stationary shaft (211) is fixed to the center of the first wheel (210), the center of the second wheel (220) is provided with a through hole (221), and the second wheel (220) is sleeved on the stationary shaft (211).

7. The stage light using the gears to drive the light head to rotate according to claim 1, wherein a misalignment angle between the first wheel (210) and the second wheel (220) is adjustable.

8. The stage light using the gears to drive the light head to rotate according to claim 7, wherein the first gear (200) further comprises an adjusting part which adjusts the misalignment angle between the first wheel (210) and the second wheel (220), and a locking part which locks the first wheel (210) and the second wheel (220) after adjustment.

9. The stage light using the gears to drive the light head to rotate according to claim 8, wherein the adjusting part comprises an adjusting screw (230), a threaded hole (231) provided at the first wheel (210) and an adjusting hole (232) provided at the second wheel (220), the adjusting screw (230) comprises a first screw (2301) and a first screw head (2302), the first screw (2301) is inserted into the threaded hole (231) and the adjusting hole (232) and is connected to the threaded hole (231), a width of the adjusting hole (232) is greater than a width of the first screw (2301), one side of the first screw head (2302) abuts against a side wall of the adjusting hole (232), an active gap (2321) is provided between the other side of the first screw head (2302) and the side wall of the adjusting hole (232), during rotation of the adjusting screw (230), the first screw head (2302) drives the second wheel (220) to rotate, and the active gap (2321) increases or decreases accordingly.

10. The stage light using the gears to drive the light head to rotate according to claim 9, wherein a portion where the adjusting hole (232) abuts against the first screw head (2302) and/or a portion where the first screw head (2302) abuts against the adjusting hole (232) is an inclined plane.

11. The stage light using the gears to drive the light head to rotate according to claim 10, wherein an end of the first screw head (2302) and/or an end of the adjusting hole (232) which is far away from the first wheel (210) has a frustum shape.

12. The stage light using the gears to drive the light head to rotate according to claim 9, wherein a center line of the threaded hole (231) and a center line of the adjusting hole (232) are staggered with each other.

13. The stage light using the gears to drive the light head to rotate according to claim 8, wherein the locking part comprises a locking hole (241) penetrating the first wheel (210) and the second wheel (220), and a locking screw (240) inserted into the locking hole (241).

14. The stage light using the gears to drive the light head to rotate according to claim 13, wherein the locking hole (241) comprises a locking section (2411) located in the first wheel (210) and a penetrating section (2412) located in the second wheel (220), the locking screw (240) comprises a second screw (2401) and a second screw head (2402), the second screw (2401) is connected to the locking section (2411), a width of the penetrating section (2412) is greater than a width of the second screw (2401), and the second screw head (2402) abuts against a surface of the second wheel (220).

15. The stage light using the gears to drive the light head to rotate according to claim 8, wherein the number of the locking part is at least two.

16. The stage light using the gears to drive the light head to rotate according to claim 15, wherein the number of the locking part is three, the number of the adjusting part is one, and the locking parts and the adjusting part are evenly distributed around a center of the first gear (200).

17. The stage light using the gears to drive the light head to rotate according to claim 1, wherein the drive shaft (410) of the driving mechanism (400) is parallel to the pivot shaft (110) of the light head (100).

18. The stage light using the gears to drive the light head to rotate according to claim 1, wherein any adjacent two of the second gear (300) are meshed for transmission by the first gear (200), or any adjacent two of the first gear (200) are meshed for transmission by the second gear (300).

19. The stage light using the gears to drive the light head to rotate according to claim 1, wherein a diameter of the first gear (200) is smaller than a diameter of the second gear (300).

20. The stage light using the gears to drive the light head to rotate according to claim 19, wherein the number of the first gear (200) is one, and the number of the second gear (300) is one, the first gear (200) is connected to the drive shaft (410) of the driving mechanism (400), and the second gear (300) is connected to pivot shaft (110) of the light head (100).
